Europäisches Patentamt

European Patent Office

Office européen des brevets

(19)

(11) Publication number: **0 126 476**
**B1**

(12) **EUROPEAN PATENT SPECIFICATION**

(45) Date of publication of patent specification: **08.06.88**

(51) Int. Cl.⁴: **B 60 C 11/08**

(21) Application number: **84105767.2**

(22) Date of filing: **21.05.84**

(54) Agricultural and industrial tractor tires.

(30) Priority: **24.05.83 IT 2123983**

(43) Date of publication of application:
**28.11.84 Bulletin 84/48**

(45) Publication of the grant of the patent:
**08.06.88 Bulletin 88/23**

(84) Designated Contracting States:
**DE FR GB LU NL**

(56) References cited:
**DE-B-1 098 386**
**DE-C- 888 654**

(73) Proprietor: **PIRELLI COORDINAMENTO**
**PNEUMATICI Società per Azioni**
**Piazzale Cadorna, 5**
**I-20123 Milan (IT)**

(72) Inventor: **Rimondi, Giovanni**
**Via Caruso 7**
**Milan (IT)**

Courier Press, Leamington Spa, England.

EP 0 126 476 B1

## Description

The present invention refers to pneumatic tires intended to be mounted prevalently on the driving wheels of the agricultural and industrial tractors which, as known, must operate in the same efficacious way on any type of grounds: to cite some examples, on the soft grassy-surfaces as on the hard ground, on the planted field as on marshy zones, on rocky, gravelly, sandy, clayey grounds.

It is known that the pneumatic tires of this type, in order to be able to operate in all these different conditions, are provided with a tread having lugs which are greatly in relief, distributed circumferentially along the periphery of the pneumatic tire, spaced apart from one another, arranged in two series on opposite parts of the equatorial plane of the tire, preferably offset from one another and extending from each sidewall as far as the centre line of the tire, said lugs having usually an oblique path with respect to the circumferential line of the tire.

Said lugs have prevalently a section of a shape more or less approximately like to a trapezium, with the smaller base at a radially outer position and a plan path non exclusively rectilinear, but very often also curved or according to a broken line.

In the tires having this tread, the space between two subsequent lugs is constituted by a toroidal surface or also of a more complex shape, radiused at the sidewalls of the lugs themselves; then the sidewalls can have a constant or variable inclination, equal for both the sidewalls or different from one sidewall and the other, but anyway always very steep; the carcass can be constituted by crossed plies or of radical type; in this case the carcass is also provided with a reinforcing annular structure arranged at the crown.

During the tire service, the lugs of the tread penetrate into the ground with the front sidewall, taking advantage of the cutting action developped by the sharp edge between the sidewall and the radially outer surface, and developping a strong tractive force, determined by the reaction between the ground and the surface of the front sidewall: thus it is possible to understand how the value of the developped stress depends mostly on the radial height of the lug.

The consequence of this tensile stress on the lugs of the known type having a trapezoidal section is a quick wearing out of the lug itself, which makes shortly the tire unserviceable for works that do not consists in the simple towing action of trailers on roads in good condition; the lugs of the tires, especially when working on hard grounds, wear out quickly and in a very irregular way, very often also with great damages.

In particular the radially outer corner of the front sidewall chips away in small pieces, while thin crackings occur at the base of the lugs which with the passing of time become more and more marked and wider and wider up to lead to the tearing of the whole blocks of rubber from the lug.

Further, the strong sharp action developped by the edge of the front sidewall on the ground, even if accepted for certain works, it is too strong on other grounds, as in the case in which the vehicle runs on the soft grassy-surface, and ruins the above type of ground in an unacceptable way.

In order to try to put a stop to these drawbacks, many interventions on the section and on the plan path of the lugs have been proposed in time, among which that of using for the front sidewall of the lugs a curvilinear profile, more precisely a cycloid profile (see e.g. DE—B—1098386, corresponding with the preamble of claim 1).

By means of this profile, some advantages have been shown, especially in respect of the self-cleaning of the tire working on hard grounds.

However, also these lugs have not solved the cited problems, which have become more serious in consequence of the great power increase reached by the modern tractors and by the diffusion of works that require greater and greater tractive stresses, as for instance the ploughing in depth.

Said greater tensile stresses require, as seen, an increase of the height of the lugs, while as regards the behaviour, the weight and the cost of the tire, an adequate increase of the thickness of the above said lugs is not allowed since these latter result thus thinner and consequently more sensitive to fatigue, with consequent chunkings, tearings and breakings, particularly serious when the tire works on very dry clayey grounds.

The Applicant has now found a new way of drawing the profile of the front sidewall of the lugs of these types of tires, which has demonstrated of being able to solve in large measure the stressed problems, originating tires able to develop a strong gripping action, protecting the lugs themselves from premature damages and irregular wearings-out, permitting instead a slower and greatly uniform wearing-out.

Therefore the object of the present invention is a pneumatic tire for agricultural and industrial tractors provided with a tread comprising a plurality of lugs arranged the one after the other along the circumference of the tire in two contiguous series, offset one with respect to the other, on opposite parts with respect to the equatorial plane of the tire, the lugs of each series extending obliquely from the tread edge toward said equaterial plane and being spaced apart from one another in circumferential sense, each lug presenting a cross-section, perpendicular to the axis of the lug, of approximately trapezoidal shape, having two sidewalls, a front sidewall and a back sidewall, respectively, in respect to the running direction, the front sidewall of said lugs presenting on the cross-section, a curvilinear profile portion, convex toward the outside, radially developped toward the inside, starting from a point (K) on the radially outer surface of said lug as far as a point (P) where the curvature of said profile is null or reversed characterized by the fact that said profile is defined by the equation

(1)    $y = Ax^3 + Bx^2 - Cx$

where

(2)    $A = \dfrac{2h}{b^3} - \dfrac{tgv + tgw}{b^2}$

(3)    $B = \dfrac{-3h}{b^2} + \dfrac{tgv + 2tgw}{b}$

(4)    $C = tgw$

being, respectively, h the depth of the point P with respect to the radially outer surface and b the distance, in parallel to said outer surface, of point P from the point where said curvilinear profile begins, v and w the angles, referred to the direction perpendicular to the radial direction formed by the tangents to the profile at points P and K and wherein point K constitutes the origin of a couple of cartesian axes "r" and "s", orthogonal to each other, on the plane of the cross section, along which the values y and x are the coordinates of a general point of said profile.

Very conveniently the angle "w" is different from 0° and is preferably comprised between 5° and 60°.

Also it is convenient that the ratio between the real width of the lug in correspondence of the radially outer surface and the corresponding theoretic width of said lug is comprised between 0.4 and 0.9.

Finally, according to a further embodiment, the ratio between the depth h of said point P and the depth d of the lug is preferably comprised between 0.1 and 0.6.

Anyhow the present inention will be better understood by the following description and attached sheets of drawing made only by way of non-limiting example, of which:

Figure 1 shows a plan view of a tread portion according to the invention;

Figure 2 shows the profile according to the invention for a lug of the tread shown in Figure 1, on the cross-section perpendicular to the axis of the lug, in comparison with the usual profile known by the state of the art;

Figure 3 shows, always on the cross-section as in Figure 2, the parameters typical for determining the profile of the invention.

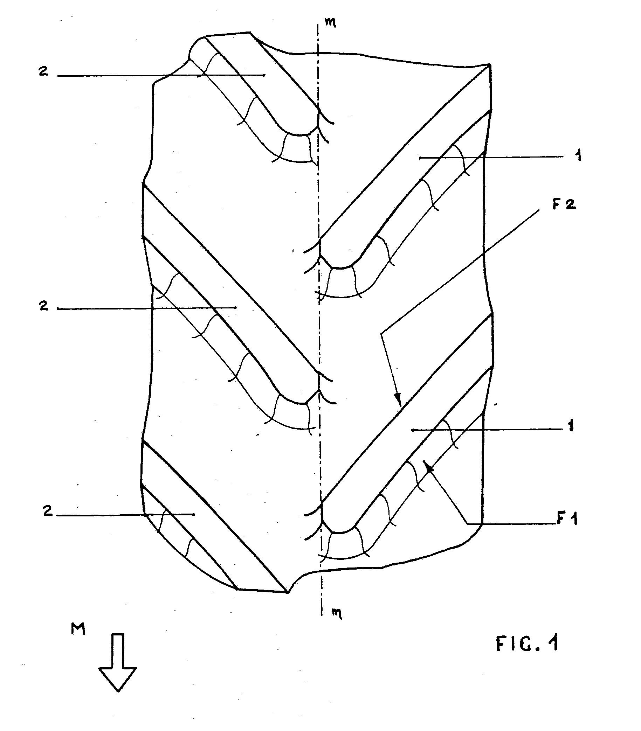

More specifically, Figure 1 represents a partial plan view of the tread of a pneumatic tire for aricultural and industrial tractors according to the present invention, provided with lugs 1 and 2 of relevant height arranged circumferentially the one after the other along the periphery of the tire, in two distinct series, one for each part with respect to the equatorial plane of the tire.

As it can be seen, the lugs of the two series are offset from each other and extend obliquely with respect to the circumferential direction of the tire from the tread edges as far as the centre line m—m of the tire.

The advancing direction of the tire is indicated with "M" in the Figures and with respect to this direction the above said lugs show a front sidewall F1 and a back sidewall F2.

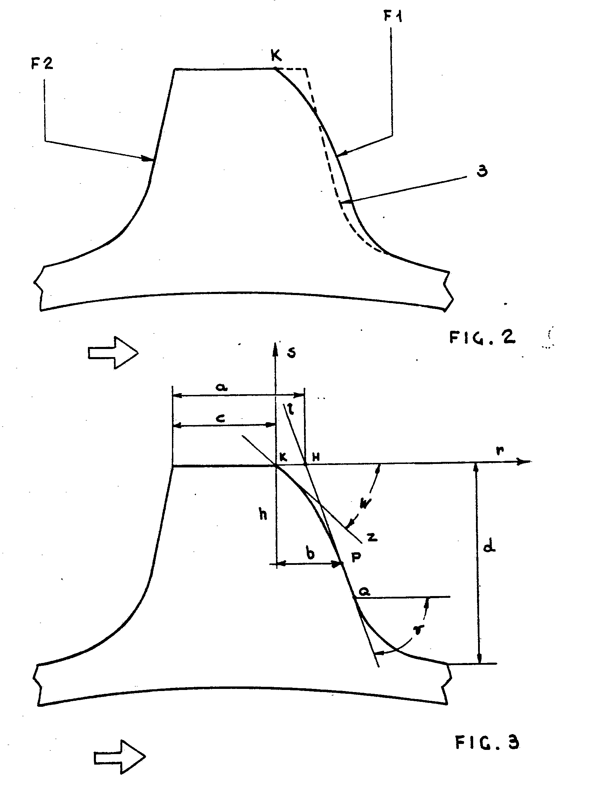

More precisely (Figure 2) the lugs of these types of tires have a shape more or less like to a trapezium (on the cross-section with a plane perpendicular to the axis of the lug) with the greater base anchored to the toroidal surface of the tire and the smaller base apt to penetrate into the ground to originate the traction necessary for advancing the vehicle.

Figure 2 shows with dashed line 3 the most usual known profile for said lugs, provided with two substantially rectilinear very steep sidewalls which finish wiht a sharp edge along the line of connection with the radially outer surface of said lug.

The profile drawn with a continuous line is instead that of the lug according to the invention: it extends between a point K on the radially outer surface of the lug and a point P in a radially inner position, on the front sidewall of said lug.

The profile according to the invention is defined through an equation whose parameters are of easy determination.

Let start by observing that the position of K can be immediately defined. As regards point P, it must be considered that the profile according to the invention can be radiused with the groove surface, through a rectilinear portion defined by end-points P and Q, which can be easily noted on the finished tire, or through a point of inflection, when P and Q coincide at only one point where the curvature of the profile is reversed; in this case the tangent "t" is definable at the point of inflection and can be considered for the purposes of the present invention as the prolongation of the portion PQ.

The above said tangent can coincide or not with the profile of the lug sidewall of the known tires: in the case shown in Figure 2 said tangent does not clearly coincide with the profile 3, having instead substantially the same inclination.

Having now defined the position P (on the cross-section in the plane perpendicular to the axis of the lug), the values h and b can be easily noted on the tire mounted on the rim and inflated at the service pressure; said values constitute, respectively, the depth of the point P with respect to the radially outer surface of the lug and its distance, in parallel in this surface, from point K.

Here it is observed that the point K constitutes the origin of a couple of cartesian axes "r" and "s", orthogonal to each other, on the plane of the cross-section, along which the values x and y (correspondents of b and h) are to be measured; and values x and y being those relative to a general point situated along the sidewall of the lug, and comprised between K and P, so that x and y will be of opposite sign.

The curvilinear profile of the above said sidewall is determined by the equation:

(1)  $y = Ax^3 + Bx^2 - Cx$

where the constants A, B and C are respectively

(2)  $A = \dfrac{2h}{b^3} = \dfrac{tgv + tgw}{b^2}$

(3)  $B = \dfrac{-3h}{b^2} + \dfrac{tgv + 2tgw}{b}$

(4)  $C = tgw$

being "v" and "w" the angles (Figure 3) referred to the direction perpendicular to the radial one, formed by the tangents "t" and "z", respectively, to the profile of the invention in the points P and K.

The value of the angle v is substantially constant and equal for all the tires, of the order of 82°—50°, while, as regards the angle w, it is advantageous that it is different from 0° anf preferably comprised between 5° and 60°.

In addition to these cited values, also some other particular geometric sizings show themselves to be suitable for a particularly behaviour of the tire. Firstly it can be noted in Figure 3 that the intersection between r and t determines point H which, coupled to the radially outer corner of the lug back sidewall, permits to establish the size of "a": "a" is referred to the theoretic width of the lug, i.e. the width of the radially outer surface of the known lug, corresponding to the lug according to the invention.

It is clear that the real width "c" of the lug of the invention, i.e. the distance between the above said corner of the back sidewall and point K can be easily measured directly on the tire.

The Applicant has found that it is convenient that the value of the ratio c/a is comprised between 0.4 and 0.9.

By "d" it is intended the depth of the lug, i.e. the distance between the radially outer surface and the groove surface comprised between two adjacent lugs, measured in one plane · perpendicular to the axis of the lug on the front sidewall part: also it will be better to choose for the ratio h/d a value comprised between 0.1 and 0.6.

The pneumatic tire according to the invention has demonstrated to be able to solve rightly the problem cited at the beginning of the present description.

With reference to Figure 2, it can be easily observed that the profile of the invention reaches a different distribution of the material along the radial development of the lug with respect to the known profile (3) originating a lug less subjected to the abrasion in radially outer position and more resistant in radially inner position where the tearing stresses are greater.

Said advantages are further marked also with respect to the known cycloid profile, which, with the same mechanical resistance of one lug requires a greater quantity of elastomeric material.

Then, if this latter profile should be traced in such a way as to realize a lug substantially without excess of material with respect to that of the invention, also it could be noted that the cycloid profile determines an inadmissible thinning of the lug in proximity of its radially outer end and in correspondence of the zone of union with the groove surface comprised between one lug and the adjacent one, where the cutting and tensile stresses which are exerted on the lugs are greater and where usually the tearings which lead to a premature destruction of the lug themselves rise.

In particular the profile according to the invention realizes an optimal distribution of the material along the radial development of the lug, eliminating all the previous chunkings of the outer front corner and stressing the regularity of the wearing-out and the fatigue resistance.

As regards the wearing-out, it develops slowly, keeping unchanged the geometry of the lug itself, so that the anomalous vibrations of the vehicle during its running on the road and the undesired destructive effects of the grassy-surface of soft grounds are avoided: further the improved fatigue resistance eliminates all those tearings at the base of the lugs which lead to the separation of the lug from the tire with the passing of time.

Also the pneumatic tire according to the invention demonstrates to develop an efficacious and strong tractive force when the type of work and the ground require this, without however upsetting too much the ground and demonstrating further a high self-cleaning capacity.

**Claims**

1. Pneumatic tire for agricultural and industrial tractors provided with a tread comprising a plurality of lugs (1, 2) arranged the one after the other along the circumference of the tire in two contiguous series offset one with respect to the other, on opposite parts with resepct to the equatorial plane (m—m) of the tire, the lugs of each series extending obliquely from the tread edge toward said equatorial plane and being spaced apart from one another in circumferential sense, each lug presenting a straight section perpendicular to the axis of the lug, of approximately trapezoidal shape, presenting two sidewalls ($F_1$, $F_2$), being a front sidewall ($F_1$) and a back sidewall ($F_2$), respectively, with reference to the running direction (M) of the tire the front sidewall ($F_2$) of said lugs (1, 2) presenting, on the cross-section, a curvilinear profile portion, convex toward the outside, radially developped toward the inside starting from a point K on the radially outer surface of said lug as far as a point P where the curvature of said profile is null or is reversed, characterized in that said profile is defined by the equation:

(1) $\quad y = Ax^3 + Bx^2 - Cx$

where

(2) $\quad A = \dfrac{2h}{b^3} - \dfrac{tgv + tgw}{b^2}$

(3) $\quad B = \dfrac{-3h}{b^2} + \dfrac{tgv + 2tgw}{b}$

(4) $\quad C = tgw$

being, respectively, h the depth of point P with respect to the radially outer surface and b the distance, in parallel to said outer surface, of point P from the point K where the curvilinear profile begins, v and w the angles referred to the direction perpendicular to the radial direction, respectively, formed by the tangents (1 and 2) to the profile at points P and K, and wherein point K constitutes the origin of a pair of cartesian axes "r" and "s", orthogonal to each other, in the plane of the cross section, along which the values x and y are the coordinates of a general point on said profile.

2. Pneumatic tire according to claim 1, characterized by the fact that the angle w is different from 0°, and less than 90°.

3. Pneumatic tire according to claim 2, characterized by the fact that the angle w varies from 5° to 60°.

4. Pneumatic tire according to claim 1, characterized by the fact that the ratio between the real width (c) of the lug on its radially outer surface and the corresponding theoretic width (a) of said lug is comprised between 0.4 and 0.9.

5. Pneumatic tire according to claim 1, characterized by the fact that the ratio between the depth h of said point P and the depth d of said lug is comprised between 0.1 and 0.6.

## Patentansprüche

1. Luftreifen für landwirtschaftliche und industrielle Traktoren, der mit einem Laufstreifen versehen ist, welcher eine Mehrzahl von Vorsprüngen (1, 2) aufweist, die einer hinter dem anderen entlang des Umfanges des Reifens in zwei aneinandergrenzenden Reihen angeordnet sind, die mit Bezug aufeinander versetzt und mit Bezug auf die Äquatorialebene (m—m) des Reifens an gegenüberliegenden Teilen vorgesehen sind, wobei die Vorsprünge jeder Reihe sich von der Laufstreifenkante in Richtung gegen die Äquatorialebene schräg erstrecken und in Umfangsrichtung in einem Abstand voneinander liegen, jeder Vorsprung einen geraden Abschnitt rechtwinkelig zur Achse des Vorsprunges von angenähert trapezförmiger Gestalt darbietet, die zwei Seitenwände (F₁, F₂) darbietet nämlich eine vordere Seitenwand (F₁) und eine hintere Seitenwand (F₂) mit Bezug auf die Laufrichtung (M) des Reifens, von denen die vordere Seitenwand (F₁) der Vorsprünge (1, 2) einen krummlinigen Profilteil darbietet, der zur Außenseite konvex ist und in Richtung zur Innenseite radial verläuft, ausgehend von einem Punkt K an der radial äußeren Fläche des Vorsprunges bis zu einem Punkt P, an welchem die Krümmung des Profils Null ist oder umgekehrt ist, dadurch gekennzeichnet, daß das Profil durch die nachstehende Gleichung bestimmt ist:

(1) $\quad y = Ax^3 + Bx^2 - Cx$

worin

(2) $\quad A = \dfrac{2h}{b^3} - \dfrac{tgv + tgw}{b^2}$

(3) $\quad B = \dfrac{-3h}{b^2} + \dfrac{tgv + 2tgw}{b}$

(4) $\quad C = tgw$

wobei

h die Tiefe des Punktes P mit Bezug auf die radial äußere Fläche, und b der Abstand, parallel zu der genannten äußeren Fläche des Punktes P von dem Punkt K ist, wo das kurvenförmige Profil beginnt, v und w die Winkel zu einer Richtung rechtwinkelig zur radialen Richtung sind, gebildet durch die Tangenten (t und z) an das Profil an den Punkten P und K, und worin der Punkt K den Ursprung eines Paares von kartesischen Achsen "r" und "s" darstellt, die in der Ebene des Querschnitts orthogonal zueinander verlaufen, entlang von welcher die Werte x und y die Koordinaten eines allgemeinen Punktes auf dem Profil sind.

2. Luftreifen nach Anspruch 1, dadurch gekennzeichnet, daß der Winkel w von 0° verschieden und kleiner als 90° ist.

3. Luftreifen nach Anspruch 2, dadurch gekennzeichnet, daß der Winkel w sich im Bereich von 5° bis 60° ändert.

4. Luftreifen nach Anspruch 1, dadurch gekennzeichnet, daß das Verhältnis zwischen der echten Breite (c) des Vorsprunges an seiner radial äußeren Fläche und der entsprechenden theoretischen Breite (a) des Vorsprunges zwischen 0,4 und 0,9 liegt.

5. Luftreifen nach Anspruch 1, dadurch gekennzeichnet, daß das Verhältnis zwischen der Tiefe h des Punktes P und der Tiefe d des Vorsprunges zwischen 0,1 und 0,6 liegt.

## Revendications

1. Pneumatique pour tracteurs agricoles et industriels, pourvu d'une bande de roulement comportant une pluralité de nervures (1, 2) disposées l'une après l'autre le long de la circonférence du pneumatique dans deux séries contiguës, décalées l'une par rapport à l'autre, sur des parties opposées par rapport au plan équatorial (m—m) du pneumatique, les pattes de chaque série s'étendant en oblique depuis le bord de la bande de roulement en direction dudit plan équatorial et étant espacées l'une de l'autre dans un sens circonférentiel, chaque nervure ayant une section droite, perpendiculaire à l'axe de la nervure, d'une forme approximativement trapézoïdale, comportant deux parois latérales ($F_1$, $F_2$), à savoir une paroi latérale avant ($F_1$) et une paroi latérale arrière ($F_2$), respectivement, en relation avec la direction de déplacement (M) du pneumatique, la paroi latérale avant ($F_1$) desdites nervures (1, 2) présentant en section droite une partie de profil curviligne, convexe en direction de l'extérieur, radialement développé vers l'intérieur, et commençant à partir d'un point K situé sur la surface radialement extérieure de ladite nervure pour s'étendre jusqu'en un point P où la courbure dudit profil est nulle ou inversée, caractérisé par le fait que ledit profil est défini par l'équation:

$$(1) \qquad y = Ax^3 + Bx^2 - Cx$$

où

$$(2) \qquad A = \frac{2h}{b^3} - \frac{tgv - tgw}{b^2}$$

$$(3) \qquad B = \frac{-3h}{b^2} + \frac{tgv + 2tgw}{b}$$

$$(4) \qquad C = tgw,$$

tandis que respectivement, h désigne la profondeur du point P par rapport à la surface radialement extérieure et b désigne la distance, en parallèle à ladite surface extérieure, du point P par rapport au point où ledit profil curviligne commence, v et w désignent les angles, rapportés à la direction perpendiculaire à la direction radiale, qui sont formés par les tangentes (t et z) au profil aux points P et K et où le point K constitue l'origine d'un couple d'axes cartésiens "r" et "s", mutuellement orthogonaux, dans le plan de la section droite où les valeurs y et x désignent les coordonnées d'un point général dudit profil.

2. Pneumatique selon la revendication 1, caractérisé par le fait que l'angle w est différent de 0° et est inférieur à 90°.

3. Pneumatique selon la revendication 2, caractérisé par le fait que l'angle w varie entre 5° et 60°.

4. Pneumatique selon la revendication 1, caractérisé par le fait que le rapport entre la largeur réelle (c) de la nervure sur sa surface radialement extérieure et la largeur théorique correspondante (a) de ladite nervure est compris entre 0,4 et 0,9.

5. Pneumatique selon la revendication 1, caractérisé par le fait que le rapport entre la profondeur (h) dudit point P et la profondeur (d) de ladite nervure est compris entre 0,1 et 0,6.

FIG. 1

FIG. 2

FIG. 3